# FASCICULE DE BREVET EUROPEEN

(11) **EP 0 439 385 B1**
(45) Date de publication et mention de la délivrance du brevet: **27.07.1994**
(21) Numéro de dépôt: 91400070.8
(22) Date de dépôt: 15.01.1991
(51) Int. Cl.: C03B 37/05

(54) **Procédé et dispositif de fibrage de laine minérale par centrifugation libre**
Verfahren und Vorrichtung zum Ziehen von Mineralwollfasern durch freies Zentrifugieren
Process and apparatus for fiberising of mineral wool by means of free centrifugation

(30) Priorité: 16.01.1990 FR 9000420
(43) Date de publication de la demande: 31.07.1991
(73) Titulaire: ISOVER SAINT-GOBAIN, F-92400 Courbevoie (FR)
(72) Inventeur: Debouzie, Alain, F-76650 Le Petit Couronne (FR); Ellison, Christopher, F-76710 Mont Ville (FR); Pennamen, Roger, F-76800 Saint-Etienne du Rouvray (FR)
(74) Mandataire: Menes, Catherine

(56) Documents cités:
- EP-A- 0 195 725
- WO-A-88/07980
- DE-C- 919 096
- FR-A- 2 106 430
- FR-A- 2 322 114
- GB-A- 867 299
- US-A- 2 700 176

## Description

L'invention a trait aux techniques de formation de fibres minérales à partir d'une matière étirable et notamment à partir d'un matériau fondu à point de fusion élevé par exemple du type verre basaltique ou laitier de hauts fourneaux. Plus précisément, l'invention concerne un perfectionnement aux techniques de fibrage dites à centrifugation libre dans lesquelles le matériau à fibrer est conduit à l'état fondu à la périphérie de roues de centrifugation et est entraîné par ces roues de sorte qu'une partie du matériau s'en détache et est transformée en fibres sous l'effet de la force centrifuge et que la partie restante non transformée est renvoyée vers une autre roue ou après la dernière roue retombe sous forme de grenailles.

Pour la mise en oeuvre des techniques de fibrage brièvement évoquées ci-dessus, on utilise généralement trois ou quatre roues agencées les unes à côté des autres, deux roues successives sur le trajet du matériau fondu tournant en sens inverse. La première roue est alimentée en matériau fondu par une goulotte et sert essentiellement à accélérer le matériau qui est renvoyé vers la seconde roue et ainsi de suite jusqu'à la dernière roue, le flux de matériau s'amenuisant à chaque roue à raison de la quantité de fibres formées. Avec un tel procédé de fibrage - partiel en ce sens qu'aucune des roues ne peut suffire à la transformation totale en fibres - il est très important de disposer de moyens efficaces de séparation de la matière fibrée et de la matière infibrée. En effet, cette dernière contribue uniquement à alourdir le produit final et à rendre son toucher particulièrement désagréable. Indépendamment de ce premier problème, la matière fibrée doit être acheminée vers un organe récepteur par exemple une bande sans fin munie de caissons d'aspiration qui transporte les fibres vers les dispositifs de traitement en aval de la ligne tels un nappeur, une étuve de polymérisation des liants, etc...

Cette double fonction de séparation des grenailles et de transport des fibres est dévolue à un courant d'air introduit à la périphérie des roues de centrifugation, sensiblement parallèlement aux axes de rotation desdites roues. Ce courant d'air entraîne ainsi les fibres dans une direction perpendiculaire à leur direction de formation. Dans la demande de brevet FR-A-2 322 114, il a été proposé de conférer au courant outre une vitesse axiale, une certaine vitesse tangentielle dans le sens du mouvement du rotor de manière à ouvrir le tore que constitue les fibres autour de la roue de centrifugation ; ainsi les fibres ont tendance à se répartir immédiatement sur un plus grand volume de sorte qu'il y a un moindre risque de les voir s'agglutiner en touffes. Ces touffes auraient en effet pour conséquence une moindre résistance à la traction du produit. Par ailleurs, de la demande de brevet WO-A-8 807 980, il est connu d'introduire le courant d'air non parallèlement aux axes de rotation des roues de centrifugation mais de manière légèrement divergente, et de former ainsi un cône de soufflage ; de plus une composante de vitesse tangentielle est également donnée aux courants d'air, l'objectif étant de minimiser les interactions entre le courant gazeux et les roues de centrifugation de façon à réduire les frictions entre ce courant gazeux et les courants d'air générés par la rotation à grande vitesse des roues de centrifugation.

Ces divers perfectionnements ne permettent pas d'obvier le problème dû à la formation de touffes de fibres que l'on observe dans toutes les zones relativement calmes entourant les roues de centrifugation, et notamment dans la zone centrale entre les roues. Ces touffes sont à la longue emportées avec le flux des fibres nouvellement formées, mais généralement suffisamment tardivement pour que la résine qui est pulvérisée sur les fibres lors de leur formation soit déjà pour partie polymérisée ; ces touffes se retrouvent donc sous forme de mèches isolées dans le produit fini, mèches qui tendent à diminuer la résistance à la traction car elles ne sont pratiquement pas liées au reste des fibres. De plus, ces mèches entraînent avec elles des particules infibrées qui ne contribuent que très faiblement à la résistance thermique du matelas en laine de roche. Leur présence pénalise surtout les produits les plus légers notamment les produits finis dont la densité est inférieure à 100 kg/m³. Or comme indiqué dans la demande de brevet précitée FR-A-2 322 114, il n'est pas souhaitable de trop augmenter la quantité d'air introduite à la périphérie des roues de centrifugation ceci afin d'éviter un refroidissement excessif de celles-ci. De ce fait, on ne souffle pas d'air dans l'espace intermédiaire entre les roues et on limite la quantité d'air soufflée à l'extérieur des roues ce qui crée des zones calmes avec les inconvénients que nous venons d'évoquer.

La présente invention vise à améliorer les techniques de formation de laine de roche - à partir de verres basaltiques, de laitiers de hauts fourneaux ou autres matériaux à point de fusion élevé - au moyen de roues de centrifugation afin d'obtenir une meilleure maîtrise de la circulation des gaz au voisinage des roues de centrifugation et par là des produits finis d'une qualité supérieure, notamment du point de vue de leur pouvoir isolant.

L'invention propose pour cela un procédé de formation de fibres minérales dans lequel le matériau à fibrer est déversé à l'état fondu à la surface périphérique de la première d'une série de roues de centrifugation tournant à grande vitesse, y est essentiellement accéléré et est renvoyé sur la deuxième roue d'où une partie du matériau est transformée en fibres sous l'effet de la force centrifuge, la partie restante étant éventuellement renvoyée vers la roue suivante et ainsi de suite, et dans lequel les fibres formées par les différentes roues de centrifugation sont prises en charge par un courant gazeux entourant la série de roues de centrifugation, émis à proximité immédiate desdites roues dans une direction essentiellement parallèle à leur axe de rotation. Le perfectionnement selon l'invention consiste à générer en outre au moins un courant gazeux auxiliaire, à distance des roues de centrifugation, ce courant gazeux auxiliaire ayant sensiblement la même direction que le courant gazeux principal.

Le principe de ce courant gazeux auxiliaire est la suppression de tous les courants de retour qui sans cela se forment par exemple dans la zone centrale du dispositif de fibrage, entre les roues de centrifugation, ou à l'extérieur du dispositif, dès qu'on s'éloigne de la périphérie des roues.

Pour ce qui concerne la zone centrale, ce courant gazeux auxiliaire peut être avantageusement généré par une traversée d'air entre les roues de centrifugation produite par l'induction d'air ambiant due à la rotation des roues de centrifugation. De la sorte, on évite la formation de courants de retour qui tendent à faire pénétrer une certaine quantité de fibres dans la zone située entre les roues de centrifugation, au centre de la machine de fibrage. Il doit être noté que pour obtenir cette traversée d'air ambiant, il suffit de ne pas obstruer l'arrière de la machine, ce qui peut être réalisé notamment par une disposition de côté des moteurs servant à l'entraînement des roues. De cette façon, on évite un trop grand refroidissement des roues de sorte que le fibrage n'est pas perturbé.

Pour ce qui concerne la zone extérieure aux roues de centrifugation, le courant gazeux auxiliaire est avantageusement généré par une couronne de soufflage périphérique doublant l'organe de soufflage générant le courant gazeux principal. Cette couronne de soufflage périphérique permet de contrôler très précisément les conditions de transport des fibres vers l'organe récepteur ; par ailleurs, ce transport étant assuré, l'organe de soufflage principal peut alors être réglé uniquement en considération des conditions conduisant à une meilleure qualité de fibrage, c'est-à-dire dans les conditions qui conduisent à un étirage optimal des fibres par ce courant gazeux principal. Il est ainsi possible d'opérer avec un organe principal de soufflage qui émet un jet rasant les surfaces périphériques des roues de centrifugation et ayant une très grande vitesse et ceci sans trop augmenter le débit de cet organe principal de soufflage ; avantageusement, la répartition du débit entre les deux organes de soufflage est de l'ordre de 3 pour 2, c'est-à-dire qu'environ 60 % de l'air insufflé dans le dispositif de fibrage l'est au moyen de l'organe principal, le reste l'étant au moyen de l'organe auxiliaire.

Avantageusement encore, le courant gazeux auxiliaire est émis à une vitesse environ 4 fois moins grande que la vitesse d'émission du courant gazeux principal. Il est en effet préférable d'opérer avec une vitesse grande à proximité immédiate des roues de centrifugation - ce qui conduit à une efficacité accrue de l'étirage gazeux ; en revanche, lorsqu'on s'éloigne de la périphérie des roues, il est préférable d'y rencontrer des courants gazeux plus lents, de sorte que la différence de vitesse entre ces gaz émis par l'organe de soufflage et l'air ambiant ne soit pas trop importante et qu'il ne se produise pas de contre-courants dus aux chocs entre les différentes masses d'air.

L'invention a également pour objet un dispositif de production de fibres minérales à partir d'un matériau à point de fusion élevé du type verre basaltique, laitiers de hauts fourneaux ou autres matériaux similaires. Elle propose dans ce but un dispositif comprenant une série de roues de centrifugation disposées suivant un assemblage mettant leurs surfaces périphéries à proximité les unes des autres, animées en rotation rapide par des moteurs, deux roues consécutives sur le trajet du matériau à fibrer tournant en sens inverse, une alimentation en matériau fondu montée de façon à laisser se déverser ledit matériau sur la surface extérieure de la première roue de centrifugation et un organe de soufflage principal engendrant autour de la série de roues de centrifugation un courant gazeux essentiellement, parallèle aux axes de rotation desdites roues de centrifugation, le perfectionnement consistant en ce que les moteurs sont disposés de côté, à l'extérieur de l'ensemble constitué par la série des roues de centrifugation et entraînent lesdites roues au moyen d'organes de transmission mécanique disposés de manière à laisser un passage d'air au travers de la série de roues de centrifugation, ou, comme alternative, en ce que le dispositif comporte en outre des moyens complémentaires pour générer au moins un courant gazeux auxiliaire, à distance des roues de centrifugation et sensiblement dans la même direction que le courant gazeux principal.

L'invention propose ainsi deux variantes de réalisation éventuellement complémentaires qui visent à l'amélioration des conditions de circulation des gaz autour des roues de centrifugation, que ce soit entre ces roues ou à leur périphérie. Différents perfectionnements plus particulièrement avantageux peuvent encore être apportés ; ainsi on a intérêt à ce que les conditions de circulation de l'air autour de la machine - et même à une distance relativement grande - soient aussi homogènes que possibles, c'est pourquoi la machine est de préférence montée sur des pieds, de façon à laisser libre l'espace sous la machine. Par ailleurs, il est préférable de protéger les organes de transmission mécanique par des capots profilés qui facilitent l'écoulement des gaz. De même, on a intérêt à regrouper les canalisations d'alimentation en air, eau et liant sous les mêmes capots. Toujours dans le même esprit de favoriser l'écoulement des gaz induits entre les roues de centrifugation, il est avantageux d'utiliser des roues légèrement tronconiques, allant en s'amincissant.

Pour ce qui concerne les conditions de circulation des gaz à la périphérie des roues de centrifugation, il est plus particulièrement avantageux d'opérer avec une seconde couronne de soufflage périphérique, par exemple constituée par une série de buses de gros diamètres, la distance minimum entre l'axe d'une buse et la périphérie d'une roue de centrifugation étant avantageusement choisie entre 70 et 150 mm et de préférence entre 80 et 100 mm. Cette seconde couronne périphérique double alors la couronne principale dont l'action peut être limitée à une action d'étirage des fibres au moment même de leur formation. Pour favoriser cet étirage, il est avantageux d'opérer avec une couronne principale de soufflage constituée par une lèvre émettant un courant gazeux qui rase la périphérie des roues de centrifugation, ladite lèvre étant délimitée d'un côté par les roues elles-mêmes, et étant à une distance radiale, par rapport à la roue de centrifugation, la plus proche de l'ordre de 5 à 10 mm.

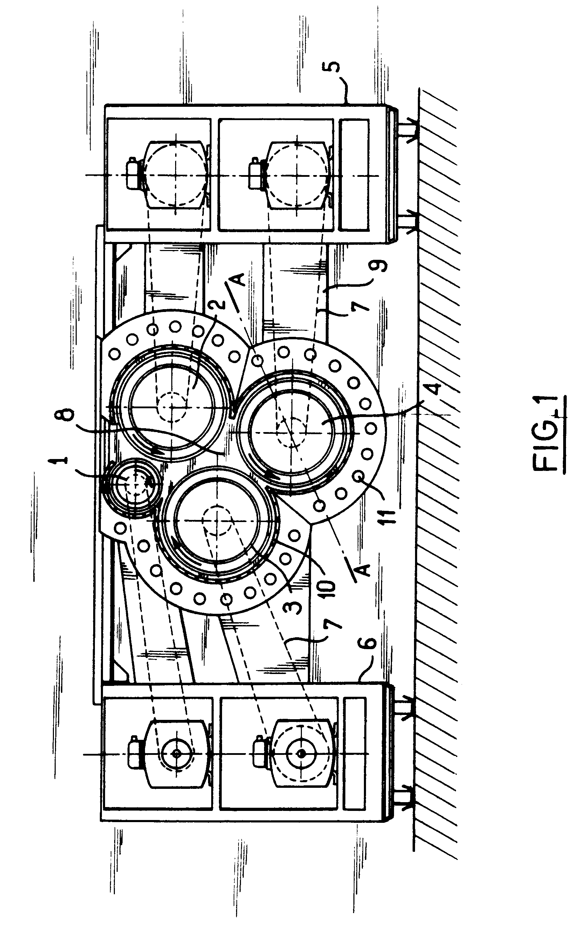

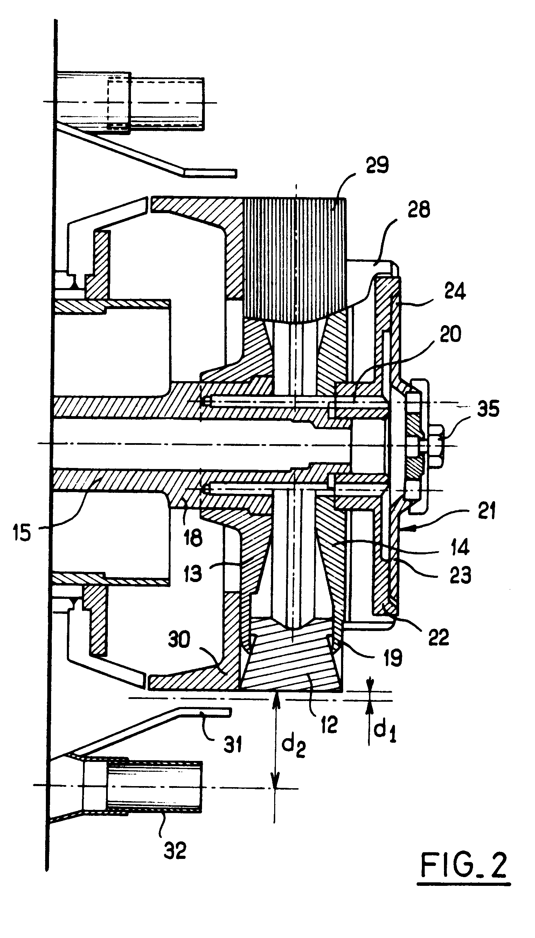

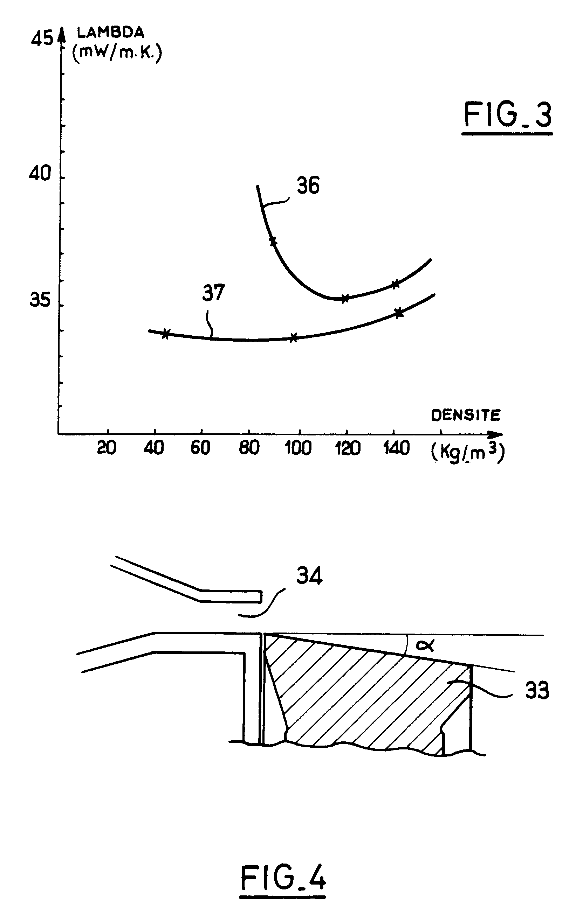

D'autres détails et caractéristiques avantageuses de l'invention ressortent de la description faite ci-après en référence aux dessins annexés qui représentent :
. **figure 1** : une vue de face d'un dispositif de fibrage selon l'invention avec 4 roues de centrifugation,
. **figure 2** : une vue détaillée de côté d'une roue de centrifugation selon la figure 1,
. **figure 3** : des courbes comparatives des conductivités thermiques en fonction de la densité pour des feutres en laine minérale obtenus avec des dispositifs selon l'art ou selon le dispositif de la figure 1,
. **figure 4** : un schéma de roue de centrifugation tronconique.

La figure 1 est un schéma de face d'un dispositif de fibrage selon l'invention, vu côté fibres. Ce dispositif est essentiellement constitué de 4 roues de centrifugation 1, 2, 3, 4, toutes de même diamètre à l'exception de la première roue qui est plus petite. Les roues 1, 2, 3, 4 sont disposées suivant un assemblage mettant leurs surfaces périphériques à proximité les unes des autres. Ces roues 1, 2, 3, 4 sont mues en rotation au moyen de blocs-moteurs 5, 6 agissant par l'intermédiaire de courroies de transmission 7, les deux roues de droite sont entraînées par exemple dans le sens des aiguilles d'une montre alors que les deux roues de gauche sont entraînées en sens inverse, de sorte que deux roues consécutives sur le trajet du matériau à fibrer (qui descend de la plus haute roue 1 à la plus basse 4) tournent en sens inverse. Les blocs-moteurs 5, 6 sont disposés de chaque côté de la série des roues 1, 2, 3, 4, ainsi l'arrière de la machine est vide et l'air ambiant peut librement traverser entre les roues, au niveau de la zone centrale 8. Ils sont montés sur un chassis supportant l'ensemble de la machine, reposant au sol sur des pieds ou des roues roulant dans des rails, ce qui permet éventuellement de déplacer la machine pour son entretien. Les courroies de transmission 7 sont entourées de capots 9 profilés de manière à éviter les zones mortes à l'arrière de la machine ce qui facilite l'induction d'air au travers de la zone centrale 8.

En tournant à grande vitesse les roues entraînent la formation d'un courant d'air induit qui balaye la zone centrale 8 et y interdit l'accumulation de fibres qui autrement retombent sous forme de mèches dont on sait qu'elles nuisent à la qualité finale du produit. Par ailleurs, comme l'environnement de la machine est extrêmement dépouillé, la rotation des roues va créer une sorte d'enveloppe gazeuse à distance des roues, enveloppe qui tend elle-aussi à "nettoyer" la machine.

La série de roues 1, 2, 3, 4 est contournée par un organe de soufflage périphérique 10, constitué par une buse de soufflage continue, émettant un courant gazeux d'étirage essentiellement parallèle aux axes de rotation des roues de centrifugation. Ce courant gazeux principal a essentiellement pour rôle d'aider à l'étirage des fibres qui, sous l'effet de la force centrifuge, se détachent de la paroi périphérique des roues de centrifugation. Les fibres formées étant très fines, elles se refroidissent très rapidement ; cette action d'étirage est donc maximale à proximité immédiate de la paroi d'une roue ce qui explique l'intérêt d'un courant gazeux rasant.

Cette buse de soufflage 10 est doublée par un ensemble de buses à gros diamètres 11 qui émettent des jets d'air également essentiellement parallèles au courant gazeux principal et dont le rôle va être maintenant expliqué plus précisément en référence avec la figure 2 où est schématisée une coupe d'une roue de centrifugation, selon l'axe A-A de la figure 1.

On a représenté à la figure 2, une roue de centrifugation constituée par une jante 12 supportée par des flasques 13, 14. La roue est entraînée en rotation par son arbre 15. Le flasque 13 repose contre une butée 18 de l'arbre 15; de même que le flasque 14, il retient la jante 12 par des saillies 19. Des vis de blocage 20 fixent également sur l'arbre 15 un disque atomiseur 21 constitué par deux flasques 22, 23 associés par des vis 24. L'eau de refroidissement est acheminée jusqu'à la jante 12 par une gorge 25 alimentée par des ouvertures 26 et est évacuée par des ouvertures disposées sur les côtés de la roue et ici non représentées. La composition d'alimentation en liants est amenée jusqu'au compartiment délimité par les deux flasques 22, 23 et s'en échappe par des rainures 27 sous forme de gouttelettes qui éclatent sous l'action du courant gazeux périphérique.

Sur cette figure 2 on peut également observer une collerette 28 qui sert de protection au disque diffuseur et interdit la pénétration de fibres entre les flasques 14 et 22. On a également représenté dans la partie supérieure du dessin la partie extérieure de la jante 12 qui est pourvue d'un certain nombre de rainures longitudinales 29 destinées à favoriser l'accrochage du matériau à fibrer.

Sur toute une portion de sa périphérie, la roue de centrifugation est entourée d'un organe de soufflage. Cet organe de soufflage est délimité d'une part par le flasque arrière 30, solidairement entraîné en rotation avec la roue et la paroi fixe 31. La distance radiale D₁, séparant la buse de la roue est de préférence comprise entre 5 et 10 mm. Cette distance D₁, et le débit d'alimentation en air sont avantageusement choisis de manière à ce que la vitesse moyenne du courant gazeux principal émis soit supérieure ou égale à 100 m/s, de façon à optimiser l'étirage des fibres par ce courant gazeux.

Le courant gazeux est émis essentiellement parallèlement à l'axe de rotation de l'arbre 15, encore qu'une certaine composante tangentielle puisse lui être donnée conformément aux enseignements de FR-A-2 322 114.

Il est à noter que ce courant d'air pourtant à très grande vitesse agit uniquement sur les particules les plus légères que sont les fibres ; les particules infibrées très fortement accélérées par la rotation des roues ne voit pratiquement pas leur trajectoire modifiée, de sorte que l'action de séparation n'est pas affectée.

Si de telles vitesses des gaz sont favorables quant à la formation des fibres, elles conduisent à des chocs importants avec les masses d'air environnantes. Ceux-ci risquent de conduire à la formation de courants de retour tout autour de la série des roues de centrifugation. Cette formation est avantageusement interdite par l'établissement de la seconde couronne de soufflage périphérique qui sert à la création d'un second courant gazeux moins rapide mais de même direction que le courant principal de soufflage.

Cette seconde couronne de soufflage est par exemple constituée par une série de buses 32 d'un diamètre relativement grand, et de préférence supérieur à 25 mm, par exemple compris entre 30 et 50 mm, émettant des jets d'air dont la vitesse est par exemple de l'ordre du quart de la vitesse des gaz émis par la couronne principale. La distance radiale D₂ qui sépare l'axe central de ces buses 32 de la roue de centrifugation la plus proche est avantageusement comprise entre 70 et 150 mm et de préférence entre 80 et 100 mm. A une telle distance, on peut considérer que ces buses 32 n'ont aucune action sur la formation des fibres et que leur rôle est donc essentiellement un rôle d'entraînement et de séparation des fibres d'avec la masse des particules infibrées. De bons résultats sont obtenus lorsqu'environ 40 % de la quantité totale de gaz soufflé autour des roues de centrifugation est due à l'action de ces buses auxiliaires 32.

D'autres mesures peuvent encore contribuer à l'amélioration du dispositif de fibrage. La plus importante, schématisée à la figure 4, consiste dans l'utilisation de roues de centrifugation tronconiques et non constituées par des cylindres droits. On a alors une roue dont la jante 33 va en s'amincissant dans le sens du courant gazeux émis par l'organe 34 d'émission du courant gazeux principal. L'angle du cône α est par exemple voisin de 15°. De cette façon, on contribue à l'élimination des surpressions au niveau de la zone centrale 8.

Une autre mesure intéressante consiste dans la protection du nez 35 de la roue de centrifugation par un capot profilé, par exemple en forme d'ogive, ce qui là encore facilite l'écoulement des gaz à proximité de la zone centrale 8. Le culot des roues de centrifugation peut également être protégé par un capot en forme d'ogive.

La comparaison de produits obtenus selon l'art, par exemple avec un dispositif conforme aux enseignements de la demande de brevet EP-A-195 725 révèle des améliorations sur deux points spécifiques très importants. Tout d'abord le taux d'infibrés dans le produit final décroît très sensiblement, ce qui a entre autres pour conséquence un produit dont le toucher est beaucoup plus agréable.

Par ailleurs, à densité égale, la résistance thermique des produits finaux est accrue, comme on peut le voir à l'examen de la figure 3 où on a représenté les courbes des conductivités thermiques Lambda (en mW/m.K) pour différentes densités 'en kg/m³) de produits obtenus selon l'art (courbe 36) ou avec un dispositif selon l'invention (courbe 37) ; la résistance thermique étant bien sûr inversement proportionnelle à la conductivité thermique. Cet accroissement de la résistance thermique déjà vrai pour des produits relativement lourds dont la densité est par exemple supérieure à 100 kg/m³ mais l'est tout particulièrement avec des produits plus légers dont la densité est par exemple comprise entre 40 et 100 kg/m³ qui sont pratiquement impossibles à produire avec des dispositifs selon l'art, la courbe 36 ayant pratiquement une asymptote pour une densité de l'ordre de 80 kg/m³.

## Revendications

1. Procédé de formation de fibres minérales dans lequel le matériau à fibrer est déversé à l'état fondu à la surface périphérique de la première (1) d'une série de roues de centrifugation (1, 2, 3, 4) tournant à grande vitesse, y est essentiellement accéléré et est renvoyé sur la deuxième roue (2) d'où une partie du matériau est transformé en fibres sous l'effet de la force centrifuge, la partie restante étant éventuellement renvoyée vers la roue suivante et ainsi de suite et dans lequel les fibres formées par les différentes roues de centrifugation (1, 2, 3, 4) sont prises en charge par un courant gazeux principal entourant la série de roues de centrifugation, émis à proximité immédiate desdites roues, dans une direction essentiellement parallèle aux axes de rotation des roues, **caractérisé en ce qu**'on génère en outre au moins un courant gazeux auxiliaire, à distance des roues de centrifugation (1, 2, 3, 4), ledit courant gazeux auxiliaire ayant sensiblement la même direction que le courant gazeux principal.

2. Procédé de formation de fibres minérales selon la revendication 1, **caractérisé en ce que** ledit courant gazeux auxiliaire est généré par une traversée d'air (8) entre les roues de centrifugation, produite par l'induction d'air ambiant due à la rotation des roues (1, 2, 3, 4).

3. Procédé de formation de fibres minérales selon la revendication 1 ou 2, **caractérisé en ce que** le (ou lesdits) courant(s) gazeux auxiliaire(s) est généré par une couronne de soufflage (11) doublant l'organe de soufflage (10) générant le courant gazeux principal.

4. Procédé de formation de fibres minérales selon la revendication 3, **caractérisé en ce qu'**environ 60 % de la quantité totale d'air soufflé autour de la série des roues de centrifugation (1, 2, 3, 4) appartient au courant principal d'étirage.

5. Procédé de formation de fibres minérales selon l'une des revendications 3 ou 4, **caractérisé en ce que** la vitesse des gaz du courant auxiliaire est environ égale au quart de la vitesse des gaz du courant principal.

6. Procédé de formation de fibres minérales selon l'une des revendications 3 à 5, **caractérisé en** ce que la vitesse des gaz du courant principal est supérieure ou égale à 100 m/s.

7. Dispositif pour la production de fibres minérales comprenant une série de roues de centrifugation (1, 2, 3, 4) disposées suivant un assemblage mettant leurs surfaces périphériques à proximité les unes des autres, animées en rotation rapide par des moteurs (5, 6), deux roues consécutives sur le trajet du matériau à fibrer tournant en sens inverse, une alimentation en matériau fondu montée de façon à laisser se déverser ledit matériau sur la surface extérieure de la première roue de centrifugation et un organe de soufflage principal (10) engendrant autour de la série de roues de centrifugation un courant gazeux essentiellement parallèle aux axes de rotation desdites roues de centrifugation (1, 2, 3, 4), **caractérisé en ce que** le dispositif comporte en outre des moyens complémentaires (8, 11) pour générer au moins un courant gazeux auxiliaire, à distance des roues de centrifugation et sensiblement dans la même direction que le courant gazeux principal.

8. Dispositif pour la production de fibres minérales comprenant une série de roues de centrifugation (1, 2, 3, 4) disposées suivant un assemblage mettant leurs surfaces périphériques à proximité les unes des autres, animées en rotation rapide par des moteurs (5, 6), deux roues consécutives sur le trajet du matériau à fibrer tournant en sens inverse, une alimentation en matériau fondu montée de façon à laisser se déverser ledit matériau sur la surface extérieure de la première roue de centrifugation et un organe de soufflage principal (10) engendrant autour de la série de roues de centrifugation un courant gazeux essentiellement parallèle aux axes de rotation desdites roues de centrifugation, **caractérisé** en ce **que** les moteurs (5, 6) sont disposés de côté, à l'extérieur de l'ensemble constitué par la série des roues de centrifugation et entraînent lesdites roues au moyen d'organes de transmission mécanique (7) disposés de manière à laisser un passage d'air (8) au travers de la série de roues de centrifugation.

9. Dispositif pour la production de fibres minérales selon la revendication 8, **caractérisé en ce que** lesdits organes de transmission (7) sont protégés par un capot profilé (9) qui entoure également les conduites d'alimentation en air associées aux roues de centrifugation (1, 2, 3, 4).

10. Dispositif pour la production de fibres minérales selon la revendication 8 ou 9, **caractérisé en ce qu'**il comporte en outre des moyens complémentaires (11) de soufflage d'air, placés à distance de l'organe de soufflage principal (10).

11. Dispositif pour la production de fibres minérales selon la revendication 7, **caractérisé en ce que** lesdits moyens complémentaires (11) sont des organes de soufflage placés à distance de l'organe de soufflage principal (10).

12. Dispositif pour la production de fibres minérales selon l'une des revendications 7 à 11, **caractérisé en ce** **que** lesdites roues de centrifugation (33) sont tronconiques.

13. Dispositif pour la production de fibres minérales selon l'une des revendications 7 à 12, **caractérisé en ce** **que** l'organe de soufflage principal (31) est constitué par une buse délimitée côté intérieur par les roues de centrifugation elles-mêmes.

14. Dispositif pour la production de fibres minérales selon l'une des revendications 11 à 13, **caractérisé en ce** **que** lesdits organes de soufflage complémentaires (32) sont formés d'une série de buses dont le diamètre est supérieur à 25 mm.

15. Dispositif pour la production de fibres minérales selon la revendication 14, **caractérisé en ce que** la distance minimum D₂ entre l'axe d'une buse de la série de buses (32) et la périphérie d'une roue de centrifugation est comprise entre 70 et 150 mm et de préférence entre 80 et 100 mm.

16. Dispositif pour la production de fibres minérales selon l'une des revendications 13 à 15, **caractérisé en ce** **que** la distance radiale D₁, entre la buse constituant l'organe de soufflage principal (31) et la roue est comprise entre 5 et 10 mm.

17. Dispositif pour la production de fibres minérales selon l'une des revendications 7 à 16, **caractérisé en ce** **que** les culots des roues de centrifugation sont protégés par des capots.

18. Dispositif pour la production de fibres minérales selon l'une des revendications 7 à 17, **caractérisé en ce** **que** les nez (35) des roues de centrifugation sont protégés par des capots.

19. Dispositif pour la production de fibres minérales selon l'une des revendications 7 à 18, **caractérisé en ce** **qu'**il est supporté par un chassis posé sur des pieds de manière à laisser un espace vide sous la machine.

## Patentansprüche

1. Verfahren zur Bildung von Mineralfasern, bei dem das zu zerfasernde Material im geschmolzenen Zustand auf die Umfangsfläche des ersten (1) einer Reihe von mit hoher Geschwindigkeit drehenden Schleuderrädern (1, 2, 3, 4) gegossen, dort wesentlich beschleunigt und auf das zweite Rad (2) weiterbefördert wird, von wo ein Teil des Materials unter der Einwirkung der Zentrifugalkraft in Fasern umgeformt wird, und der übrige Teil eventuell auf das nächste Rad weiterbefördert wird und so weiter, und bei dem die von den verschiedenen Schleuderrädern (1, 2, 3, 4) gebildeten Fasern von einem die Reihe von Schleuderrädern umgebenden Hauptgasstrom, welcher in unmittelbarer Nähe dieser Räder in einer im wesentlichen zu ihrer Drehachse parallelen Richtung abgegeben wird, erfaßt werden, **dadurch gekennzeichnet, daß** des weiteren im Abstand von den Schleuderrädern (1, 2, 3, 4) mindestens ein Nebengasstrom erzeugt wird, welcher in etwa die gleiche Richtung wie der Hauptgasstrom aufweist.

2. Verfahren zur Bildung von Mineralfasern nach Anspruch 1, **dadurch gekennzeichnet, daß** der Nebengasstrom von einer Querluftströmung (8) zwischen den Schleuderrädern erzeugt wird, welche durch die Induktion von Umgebungsluft aufgrund der Drehung der Schleuderräder (1, 2, 3, 4) hervorgebracht wird.

3. Verfahren zur Bildung von Mineralfasern nach Anspruch 1 oder 2, **dadurch gekennzeichnet, daß** der/die Nebengasstrom/Nebengasströme von einem Gebläsekranz (11) erzeugt wird/werden, welcher das Gebläse (10) für die Erzeugung des Hauptgasstroms unterstützt.

4. Verfahren zur Bildung von Mineralfasern nach Anspruch 3, **dadurch gekennzeichnet, daß** ca. 60% der Gesamtmenge der um die Reihe von Schleuderrädern (1, 2, 3, 4) geblasenen Luft dem Hauptausziehstrom angehören.

5. Verfahren zur Bildung von Mineralfasern nach Anspruch 3 oder 4, **dadurch gekennzeichnet, daß** die Geschwindigkeit der Gase des Nebenstroms ungefähr ein Viertel so hoch ist wie die Geschwindigkeit der Gase des Hauptstroms.

6. Verfahren zur Bildung von Mineralfasern nach einem der Ansprüche 3 bis 5, **dadurch gekennzeichnet, daß** die Geschwindigkeit der Gase des Hauptstroms höher als oder gleich 100 m/s ist.

7. Vorrichtung zur Herstellung von Mineralfasern, welche aufweist: eine Reihe von Schleuderrädern (1, 2, 3, 4), die gemäß einer Anordnung angeordnet sind, bei der ihre Umfangsflächen in gegenseitiger Nähe liegen und von Motoren (5, 6) in schneller Drehung angetrieben werden, wobei sich jeweils zwei auf dem Weg der Fasern aufeinanderfolgende Räder gegenläufig drehen; eine Schmelzezuführung, welche so angebracht ist, daß sich das Material auf die Außenfläche des ersten Schleuderrads ergießen kann; und ein Hauptgebläse (10), welches um die Reihe von Schleuderrädern einen im wesentlichen parallel zu den Drehachsen der Schleuderräder (1, 2, 3, 4) verlaufenden Gasstrom erzeugt, **dadurch gekennzeichnet, daß** die Vorrichtung des weiteren zusätzliche Mittel (8, 11) zur Erzeugung mindestens eines Nebengasstroms aufweist, welcher im Abstand von den Schleuderrädern und in etwa in der gleichen Richtung wie der Hauptgasstrom verläuft.

8. Vorrichtung zur Herstellung von Mineralfasern, welche aufweist: eine Reihe von Schleuderrädern (1, 2, 3, 4), die gemäß einer Anordnung angeordnet sind, bei der ihre Umfangsflächen in gegenseitiger Nähe liegen und von Motoren (5, 6) in schneller Drehung angetrieben werden, wobei sich jeweils zwei auf dem Weg der Fasern aufeinanderfolgende Räder gegenläufig drehen; eine Schmelzezuführung, welche so angebracht ist, daß sich das Material auf die Außenfläche des ersten Schleuderrads ergießen kann; und ein Hauptgebläse (10), welches um die Reihe von Schleuderrädern einen im wesentlichen parallel zu den Drehachsen der Schleuderräder (1, 2, 3, 4) verlaufenden Gasstrom erzeugt, **dadurch gekennzeichnet, daß** die Motoren (5, 6) seitlich, außerhalb der von der Reihe der Schleuderräder gebildeten Einheit angeordnet sind und die Räder mittels mechanischer Übertragungselemente (7) antreiben, welche so angeordnet sind, daß sie den Durchtritt von Luft (8) quer zu der Reihe von Schleuderrädern erlauben.

9. Vorrichtung zur Herstellung von Mineralfasern nach Anspruch 8, **dadurch gekennzeichnet,** **daß** die mechanischen Übertragungselemente (7) durch eine stromlinienförmige Haube (9) geschützt sind, welche auch die den Schleuderrädern (1, 2, 3, 4) zugeordneten Luftzufuhrleitungen umgibt.

10. Vorrichtung zur Herstellung von Mineralfasern nach Anspruch 8 oder 9, **dadurch gekennzeichnet, daß** sie des weiteren zusätzliche Mittel (11) zum Einblasen von Luft aufweist, welche im Abstand vom Hauptgebläse (10) angeordnet sind.

11. Vorrichtung zur Herstellung von Mineralfasern nach Anspruch 7, **dadurch gekennzeichnet, daß** die zusätzlichen Mittel (11) Gebläse sind, welche im Abstand vom Hauptgebläse (10) angeordnet sind.

12. Vorrichtung zur Herstellung von Mineralfasern nach einem der Ansprüche 7 bis 11, **dadurch gekennzeichnet, daß** die Schleuderräder (33) kegelstumpfförmig sind.

13. Vorrichtung zur Herstellung von Mineralfasern nach einem der Ansprüche 7 bis 12, **dadurch gekennzeichnet,** **daß** das Hauptgebläse (31) aus einer Düse besteht, welche an ihrer Innenseite von den Schleuderrädern selbst begrenzt ist.

14. Vorrichtung zur Herstellung von Mineralfasern nach einem der Ansprüche 11 bis 13, **dadurch** **gekennzeichnet**, **daß** die Nebengebläse (32) aus einer Reihe von Düsen mit einem Durchmesser von mehr als 25 mm gebildet sind.

15. Vorrichtung zur Herstellung von Mineralfasern nach Anspruch 14, **dadurch gekennzeichnet, daß** der Mindestabstand D₂ zwischen der Achse einer Düse der Reihe von Düsen (32) und dem Umfang eines Schleuderrades zwischen 70 und 150 mm und vorzugsweise zwischen 80 und 100 mm beträgt.

16. Vorrichtung zur Herstellung von Mineralfasern nach einem der Ansprüche 13 bis 15, **dadurch** **gekennzeichnet**, **daß** der radiale Abstand D₁ zwischen der Düse, welche das Hauptgebläse (31) darstellt, und dem Rad zwischen 5 und 10 mm beträgt.

17. Vorrichtung zur Herstellung von Mineralfasern nach einem der Ansprüche 7 bis 16, **dadurch** **gekennzeichnet,** **daß** die Lagersockel der Schleuderräder durch Hauben geschützt sind.

18. Vorrichtung zur Herstellung von Mineralfasern nach einem der Ansprüche 7 bis 17, **dadurch** **gekennzeichnet,** **daß** die Nasen (35) der Schleuderräder durch Hauben geschützt sind.

19. Vorrichtung zur Herstellung von Mineralfasern nach einem der Ansprüche 7 bis 18, **dadurch** **gekennzeichnet,** **daß** sie von einem Rahmen getragen wird, welcher so auf Füßen aufgestellt ist, daß unter der Einheit ein Freiraum bleibt.

## Claims

1. Process for forming mineral fibres, in which the material to be formed into fibres is poured in the molten state onto the peripheral surface of the first (1) of a set of centrifuging wheels (1, 2, 3, 4) rotating at high speed, is substantially accelerated there and is transferred onto the second wheel (2), from which some of the material is transformed into fibres under the effect of the centrifugal force, the remaining part optionally being transferred to the following and so on; and in which the fibres formed by the various centrifuging wheels (1, 2, 3, 4) are taken up by a principle gaseous current which surrounds the set of centrifuging wheels and is emitted in the immediate vicinity of said wheels, in a direction substantially parallel to the axes of rotation of the wheels, characterised in that at least one auxiliary gaseous current is generated in addition at a distance from the centrifuging wheels (1, 2, 3, 4), said auxiliary gaseous current having approximately the same direction as the principle gaseous current.

2. Process for forming mineral fibres according to Claim 1, characterised in that said auxiliary gaseous current is generated by a passage of air (8) between the centrifuging wheels, produced by the induction of ambient air owing to the rotation of the wheels (1, 2, 3, 4).

3. Process for forming mineral fibres according to Claim 1 or Claim 2, characterised in that the auxiliary gaseous current(s) is generated by a blower rim (11) duplicating the blower member (10) generating the principle gaseous current.

4. Process for forming mineral fibres according to Claim 3, characterised in that approximately 60 % of the total amount of air blown about the series of centrifuging wheels (1, 2, 3, 4) belongs to the principle drawing current.

5. Process for forming mineral fibres according to either one of Claims 3 and 4, characterised in that the speed of the auxiliary gaseous current is approximately one quarter of the speed of the gas of the principle current.

6. Process for forming mineral fibres according to any one of Claims 3 to 5, characterised in that the speed of the gas of the principle current is greater than or equal to 100 m/s.

7. Device for the production of mineral fibres, comprising a series of centrifuging wheels (1, 2, 3, 4) which are arranged in an assembly bringing their peripheral surfaces into proximity with one another and are driven in rapid rotation by motors (5, 6), two consecutive wheels on the path of the material to be formed into fibres rotating in the opposite sense, a molten material supply being mounted such that the material can be poured over the external surface of the first centrifuging wheel, and a principle air intake device (10) generating, about the set of centrifuging wheels, a gaseous current substantially parallel to the axes of rotation of said centrifuging wheels (1, 2, 3, 4) characterised in that the device further comprises complementary means (8, 11) for generating at least one auxiliary gaseous current, at a distance from the centrifuging wheels and substantially in the same direction as the principle gaseous current.

8. Device for the production of mineral fibres, comprising a series of centrifuging wheels (1, 2, 3, 4) which are arranged in an assembly bringing their peripheral surfaces into proximity with one another and are driven in rapid rotation by motors (5, 6), two consecutive wheels on the path of the material to be formed into fibres rotating in the opposite sense, a molten material supply being mounted such that the said material can be poured over the external surface of the first centrifuging wheel, and a principle blower member (10) generating, about the set of centrifuging wheels, a gaseous current which is substantially parallel to the axes of rotation of said centrifuging wheels, characterised in that the motors (5, 6) are disposed laterally and externally of the assembly consisting of the set of centrifuging wheels and drive these wheels by means of mechanical transmission members (7) disposed such that they allow a passage of air (8) through the set of centrifuging wheels.

9. Device for the production of mineral fibres according to Claim 8, characterised in that said transmission members (7) are protected by a profiled hood (9) which likewise surrounds the air supply conduits associated with the centrifuging wheels (1, 2, 3, 4).

10. Device for the production of mineral fibres according to Claim 8 or 9, characterised in that it furthermore comprises complementary air blower means (11), located at a distance from the principle air intake member (10).

11. Device for the production of mineral fibres according to Claim 7, characterised in that said complementary means (11) are air blower members located at a distance from the principle blower member (10).

12. Device for the production of mineral fibres according to any one of Claims 7 to 11, characterised in that the said centrifuging wheels (33) are frustoconical.

13. Device for the production of mineral fibres according to any one of Claims 7 to 12, characterised in that the principle blower member (31) consists of a nozzle delimited on the inside by the centrifuging wheels themselves.

14. Device for the production of mineral fibres according to any one of Claims 11 to 13, characterised in that the said complementary blower members (32) are formed of a set of nozzles, the diameter of which is greater than 25 mm.

15. Device for the production of mineral fibres according to Claim 14, characterised in that the minimum distance D₂ between the axis of the nozzle of the set of nozzles (32) and the periphery of a centrifuging wheel is between 70 and 150 mm and preferably between 80 and 100 mm.

16. Device for the production of mineral fibres according to any one of Claims 13 to 15, characterised in that the radial distance D₁ between the nozzle constituting the principle blower member (31) and the wheel is between 5 and 10 mm.

17. Device for the production of mineral fibres according to any one of Claims 7 to 16, characterised in that the bases of the centrifuging wheels are protected by covers.

18. Device for the production of mineral fibres according to any one of Claims 7 to 17, characterised in that the noses (35) of the centrifuging wheels are protected by covers.

19. Device for the production of mineral fibres according to any one of Claims 7 to 18, characterised in that it is supported by a framework disposed on feet such that an empty space is left below the machine.
